(19) Europäisches Patentamt
European Patent Office
Office européen des brevets

(11) **EP 1 931 075 B1**

(12) **EUROPEAN PATENT SPECIFICATION**

(45) Date of publication and mention
of the grant of the patent:
**17.11.2010 Bulletin 2010/46**

(51) Int Cl.:
***H04L 1/06*** *(2006.01)*

(21) Application number: **06301223.1**

(22) Date of filing: **07.12.2006**

(54) **Method of decoding of a received multidimensional signal**

Verfahren zur Dekodierung eines empfangenen mehrdimensionalen Signals

Procédé de décodage d'un signal reçu multidimensionnel

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**11.06.2008 Bulletin 2008/24**

(73) Proprietor: **Thomson Licensing
92130 Issy-les-Moulineaux (FR)**

(72) Inventor: **Gueguen, Arnaud
92648 BOULOGNE CEDEX (FR)**

(74) Representative: **Le Dantec, Claude
Technicolor
1-5 rue Jeanne d'Arc
92130 Issy-les-Moulineaux (FR)**

(56) References cited:
**EP-A- 1 635 500**

• UYSAL M ET AL: "NEW SPACE-TIME BLOCK CODES FOR HIGH THROUGHPUT EFFICIENCY" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, vol. VOL. 2 OF 6, 25 November 2001 (2001-11-25), pages 1103-1107, XP001099276 ISBN: 0-7803-7206-9

**Description**

1. Field of the invention.

The present invention relates to the field of digital communication. More specifically, it deals with an efficient way to implement a decoding based on a lattice (lattice decoding corresponds to a decoding of a distorted discrete multidimensional signal), that is used, for example, in a decoding of a signal transmitted through a noisy channel or multi-user detection.

2. Technological background.

Optimal decoding of digital signals that have been distorted by linear filtering (e.g. a wireless channel) and corrupted by noise is a key and recurrent issue in digital communications. An optimal decoder is the one that finds the candidate digital signal that is the most likely, given the received observed signal. Such optimal decoder is said to be optimal in the sense of Maximum Likelihood (or ML).

A basic approach to perform ML decoding consists in exhaustively enumerating all possible transmitted digital signals and selecting the most likely candidate. The selection criterion often consists in computing a Euclidean distance between the filtered candidate and the received observation (or receive signal). However, such exhaustive enumeration is very time consuming and most of the time impractical for real time applications. Indeed the number of candidates, and hence the decoder complexity, is exponential with respect to the length of the digital signal. For instance a signal carrying 10 bits may take 1024 (or $2^{10}$) different values and all these values need being enumerated in basic ML decoding.

More appropriate ML decoding algorithms have emerged based on a multidimensional lattice description of the problem, which will be referred to as lattice decoders in the sequel. For instance a signal made of 8 consecutive 16QAM symbols can be described by a 8 dimension lattice with 16 discrete possible values per dimension. After linear filtering, the lattice will remain a lattice but it will be distorted. Instead of enumerating all possible lattice points ($16^8$ in the present case), lattice decoders will restrict to evaluating lattice points that are in the vicinity of the received signal.

Such decoding methods are based on the enumeration of candidates as in document "A universal lattice code decoder for fading channel," written by E. Viterbo and J. Boutros (and published in IEEE Trans. Inform. Theory, vol. 45, pp. 1639-1642, July 1999) or in document "Lattice basis reduction: Improved practical algorithms and solving subset sum problems," written by C.P. Schnorr and M. Euchner (and published in Math. ProGraming, vol. 66, pp. 181-191, 1994). Those documents disclose ML recursive decoding algorithms that are based on a lattice and enable enumeration of points and selection of points after reception of a signal representative of data. The selection of points is done in a sphere the diameter of which depends on the signal/noise ratio. After computation of some metrics, a ML point is selected either by enumerating candidates points in a sphere (Boutros) or by successive projections on sublattices (Schnorr/ Euchner). The main drawback of the state of the art is that lattice decoders are still complex (especially for real time applications) even if they have polynomial decoding complexity (instead of exponential for basic ML).

In addition, these algorithms are not adapted to decoding of signal received with a reduced numbers of antennas in view of the dimension of the transmitted signal. Patent document referred as US20050009476 disclosed a system for doing BLAST (or Bell Labs Layered Space Time) (as disclosed in document written by Gerard. J. Foschini (1996), entitled "Layered Space-Time Architecture for Wireless Communication in a Fading Environment When Using Multi-Element Antennas" and published in Bell Laboratories Technical Journal October on pages 41-59) with fewer receive antennas or even only one receiving antenna is provided. Indeed, this method is limited to very restricted conditions and remains sub-optimal.

EP 1 635 500 A1 published on March 15, 2006 discloses a receiver for use in MIMO communication system and a method for decoding a received signal into symbols of a possible constellation of such symbols.

**3. Invention summary.**

The invention is aimed at alleviating these drawbacks of the prior art.

More particularly, the objective of the invention is to simplify the implementation of a decoding method of a MIMO signal with space/time or frequency encoding, while keeping good performances.

For this purpose, the invention proposes a method of decoding of a multidimensional received signal corresponding to a discrete multidimensional coded signal transmitted through a channel, so-called transmitted signal, the multidimensional received signal comprising several elementary signals, corresponding each to a sample of time and/or frequency and of space the number of reception antenna(s) being lower than the number of elementary signals. In order to simplify the implementation of a decoding method, the method comprises the following steps:

- a decomposition of a channel matrix into a first sub-matrix and a second sub-matrix, the transmitted signal corresponding to the multidimensional received signal being considered as the sum of contributions of two transmitted sub-signals, a first sub-signal being associated to the first sub-matrix and a second sub-signal being associated to the second sub-matrix;

- a decoding of the multidimensional received signal comprising:

  - enumeration of at least a part of all possible values of the second sub-signal;
  - for each of the enumerated values of the second sub-signal construction of a intermediate signal and decoding of the intermediate signal by a lattice decoding, the base of the lattice being defined from the first sub-matrix, the result of the lattice decoding being called candidate signal and the distance between the intermediate signal and the contribution of the candidate signal being called candidate distance;

the result of the decoding of the received signal corresponding to a combination of the candidate signal and of the value of the second sub-signal for which the candidate distance is minimum.

Advantageously, the first sub-matrix is of maximum rank.

According to different variants of the invention, the enumeration is performed either on all possible values of the second sub-signal or on only a part of possible values of the second sub-signal. In the last case, the second sub-signal are advantageously related to the columns of the channel matrix, that have energy over a threshold.

According to advantageous embodiments, the transmitted signal is space-time or space-frequency encoded. Specifically, the transmitted signal can be space-time or space-frequency encoded that is not limited to a simple spatial multiplexing.

According to a specific feature, the method comprises a reception of multidimensional received signal on antennas, the number of antennas being smaller that the number of symbols per channel use.

4. Brief description of the drawings.

The invention will be better understood, and other features and advantages will become apparent from reading the description that follows, the description referring to the appended drawings in which:

- Figure 1 represents a wireless network;
- Figure 2 represents an exemplary architecture of a data transmitter capable of sending data in a way compliant with the invention;
- Figure 3 represents an exemplary architecture of a data receiver according to a specific embodiment of the invention;
- Figure 4 represents an exemplary architecture of a decoder inside the receiver of figure 3; and
- Figures 5 to 7 represent a decoding method implemented in the receiver of figure 3 according to the invention.

5. Detailed description of the invention.

It is admitted in the state of the art that the use of space-time coding with rate greater than 1 in symbols/channel use (which is the case of BLAST or Golden code (as disclosed by J.-C. Belfiore, G. Rekaya, E. Viterbo in document entitled "The Golden Code: A 2 x 2 Full-Rate Space-Time Code with Non-Vanishing Determinants," and published in IEEE Transactions on Information Theory, vol. 51, n. 4, on pages 1432-1436, in April 2005.)) requires using at the receiver side a number of receiver chains (antenna and RF (radio front end)) at least equal to this rate. For instance, it is admitted that using a spatial multiplexing (as in BLAST) with 2 transmit antennas (yielding a rate of 2 symbols/channel use) requires implementing at least 2 receiver chains. This is indeed true if a linear reception algorithm (such as MMSE (Minimum Mean Square Error) or ZF (Zero Forcing)) is implemented, because it is well known that a linear equation system requires having a number of observations at least equal to the number of unknowns to be inverted.

However, according to specific embodiments of the invention, this constraint on the number of receive antennas is not required to satisfy, by using a non linear receiver. According to these embodiments (using a number of antennas associated to the above constraint or greater), an optimal (in the sense of Maximum Likelihood (or ML)) and low complexity decoding in that context is enabled. This allows reducing the decoding complexity. As a consequence, this enables implementing high throughput high reliability wireless MIMO transmissions with reasonable receiver complexity.

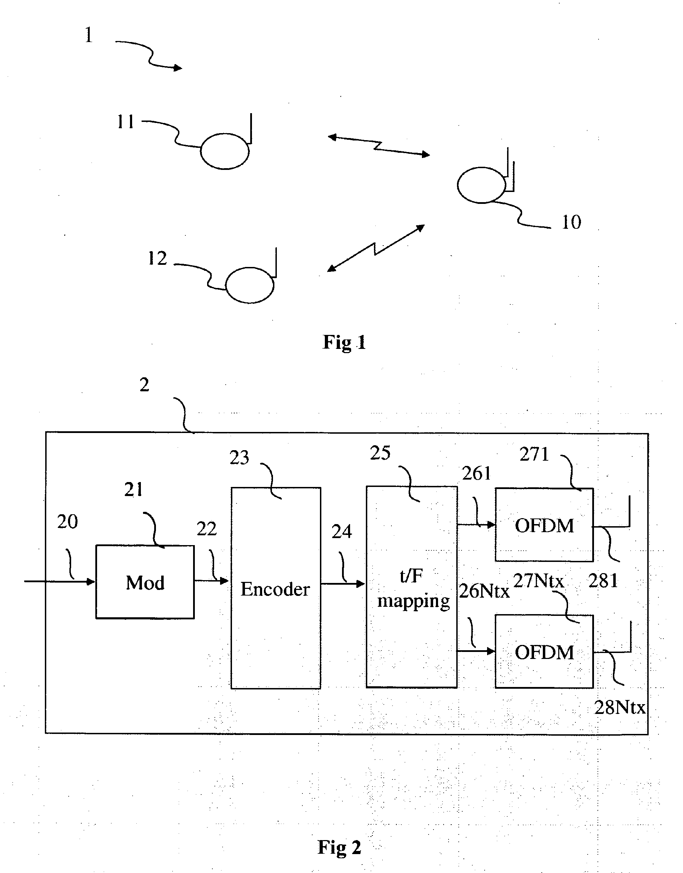

Figure 1 represents a wireless network 1 comprising several stations 10 to 12. Each station 10 to 12 comprises a transmitter and a receiver using a MIMO (or Multiple Input Multiple Output) antenna system. Station 10 has *Ntx* antennas and communicates with stations 11 and 12 through a wireless link. Stations 11 and 12 have only one antenna.

Figure 2 represents an exemplary architecture of a data transmitter 2 capable of sending data in a way compliant with the invention applied to decoding of a signal transmitted through a MIMO noisy channel. The data transmitter 2 can be implemented in station 10.

The transmitter 2 comprises:

- a modulator 21;
- an encoder 23;
- a time/frequency mapper 25;
- $Ntx$ OFDM modulators 271 to 27$Ntx$ each modulating with an OFDM modulator an input signal 261 to 26$Ntx$; and
- $Ntx$ antennas 281 to 28$Ntx$, each being associated to an OFDM modulator respectively 271 to 27$Ntx$.

The transmitter 2 receives a binary signal 22 which is digitally modulated by the modulator 21 with a first modulation which is, for instance a QAM modulation (or "Quadrature Amplitude Modulation") (e.g. 16 QAM or 64QAM). The modulator 21 generates groups of $Q$ complex QAM symbols $S1$ to $SQ$. $Q$ is for example equal to 8.

Each group of $Q$ symbols 22 is then encoded with the encoder 23 to form a STBC (or Space Time Block Code) codeword 24. The STBC is, for instance, a Golden code such as disclosed in document "The Golden Code: A 2 x 2 Full-Rate Space-Time Code with Non-Vanishing Determinants," which has been written by J.-C. Belfiore, G. Rekaya, E. Viterbo (and published in IEEE Transactions on Information Theory, vol. 51, n. 4, pages 1432-1436, Apr. 2005.). The STBC is based on a complex matrix of dimension $N_{tx}*N$ where $N$ is the time dimension of the STBC or the number of channel uses per STBC code word. The rate in number of symbols per channel use is defined as $Q/N$. According to the invention, the rate is strictly greater than 1.

The generated STBC 24 is mapped in the time/frequency mapper that transmits a dedicated signal 261 to 26Ntx to each of OFDM modulator 271 to 27Ntx. Then, each modulator 271 to 27Ntx modulates its input signal into an OFDM modulated signal that is sent on an antenna respectively 281 to 28Ntx (after possibly filtering, frequency transposition and amplification as usually done in a radio transmitted signal). As summary, the STBC codeword 24 is then sent on a MIMO channel.

Such a transmitter system is disclosed in "Space-frequency coded broadband OFDM systems", written by H. Bölcskei and A. J. Paulraj (and published in Proc. Wireless Commun. Networking Conf., Chicago, IL, Sept. 23-28, 2000, pages 1-6).

There are many possible variants of the transmitter that are compliant with the invention. Among them, a single carrier modulation can replace the OFDM modulation (or any multi carrier modulation such IOTA (for "Isotropic Orthogonal Transform Algorithm")). Then, a time/frequency mapper 25 and the OFDM modulators 271 to 27Ntx are replaced by at least two single carrier modulators associated each with a antenna.

According to other variants (that are compliant with previous ones), the first modulation can be of any digital modulation, e.g. nPSK (for "Phase Shift Keying with n phase values) or nQAM (eg with n equals to 16, 32, 64, 256...).

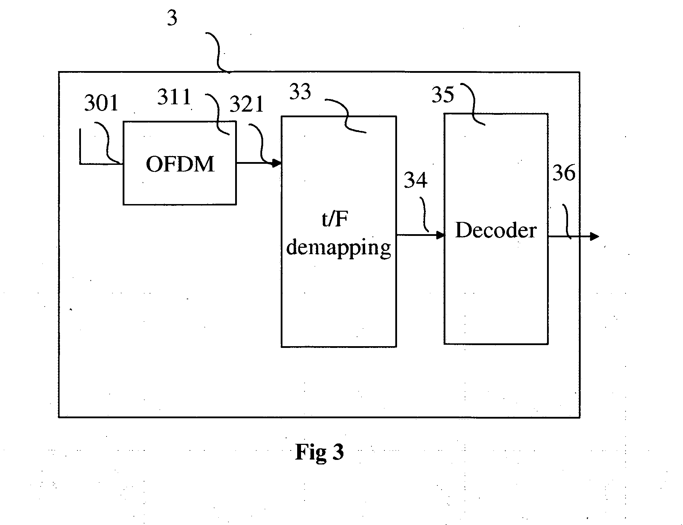

Figure 3 represents an exemplary architecture of a data receiver 3 according to a specific embodiment of the invention. The receiver 3 receives a signal sent by the transmitter 2 through a wireless channel. This channel is noisy and comprises Additive White Gaussian Noise (or AWGN) and possibly other noise such as interferences. The sent signal can also be affected by multipath echos and/or Doppler effect. The data receiver 3 can be implemented in stations 11 or 12.

The receiver 3 comprises:

- one antenna 301;
- one OFDM demodulator 311 demodulating a noisy OFDM modulated signal transmitted by the antenna 301;
- a time/frequency demapper 33; and
- a decoder 35.

The receiver 3 matches the transmitter 2 (especially for modulation and code used by the transmitter). Then, according to variants using single carrier modulation inside the transmitter, the OFDM demodulators are replaced by the corresponding single carrier demodulators.

The receiver 3 comprises one receive antenna 301 so that the received signal 301 can be represented by a $Nrx*N$ matrix, or equivalently a $(Nrx*N)*1$ vector R. $Nrx$ represents the number of receive antennas and is equal to one in the described embodiment. According to a variant of the invention, $Nrx$ is greater that 1. According to another variant, $Nrx$ is smaller or equal to the rate $Q/N$.

The transmission between the encoder 23 and decoder 35 can be modeled by the following equation:

$$R = \begin{pmatrix} H_1 & 0 & \cdots & 0 \\ 0 & H_2 & \ddots & \vdots \\ \vdots & \ddots & \ddots & 0 \\ 0 & \cdots & 0 & H_N \end{pmatrix} \underbrace{}_{G} CS + v = GS + v \qquad \text{(relation 1)}$$

Where the different parameters are as follows:

- R is the complex $(Nrx*N)*1$ received vector;
- $H_i$ is the complex $Nrx*Ntx$ channel matrix at time/frequency interval $i$ (frequency corresponds to a carrier of the multicarrier modulation; according to a variant using a single carrier modulation the interval $i$ corresponds to a time interval);
- $H = diag(H_1,..., H_N)$ is the complex block diagonal $(N*Nrx)*(N*Ntx)$ channel matrix at time/frequency intervals 1 to N;
- C is the complex $(Ntx*N)*Q$ STBC coding matrix, where $Q$ is the number of input complex symbols per STBC codeword;
- S is the complex $Q*1$ input vector of discrete modulated symbols;
- $v$ is the complex $(N*Nrx)*1$ Additive White Gaussian Noise (or AWGN) vector with autocorrelation matrix $R_v = \sigma^2|NNrx$, where $|NNrx$ is the identity matrix of size $(N*Nrx)*(N*Nrx)$ and $\sigma^2$ represents the variance of the AWGN.

According to a variant, the space/time coding process takes place with real inputs (instead of complex inputs). Then, the C matrix is a real matrix with a dimension $(2Ntx*N)*(2Q)$. The use of real matrix is advantageous for QAM modulation that can be seen as a combination of two real PAM (Pulse Amplitude Modulation). In such case, the received signal R is written in real notation and denoted R' of size $(2Nrx*N)*1$. The components of R' are made of the real and imaginary parts of components of R. As a variant, complex matrices are used. According to another variant, advantageous for PSK modulation, the detection can take place in the polar domain.

When the additive noise and interferences corrupting the received signal is not white, a whitening filter is advantageously implemented before the decoder 35. $\sigma^2$ represents the variance of the resulting whitened noise.

The time/frequency demapper 33 received demodulated signal from OFDM demodulators 311 to 31 $Nrx$ and is doing the reverse mapping (corresponding to dual operation of mapper 25). It provides a demapped signal to decoder 35.

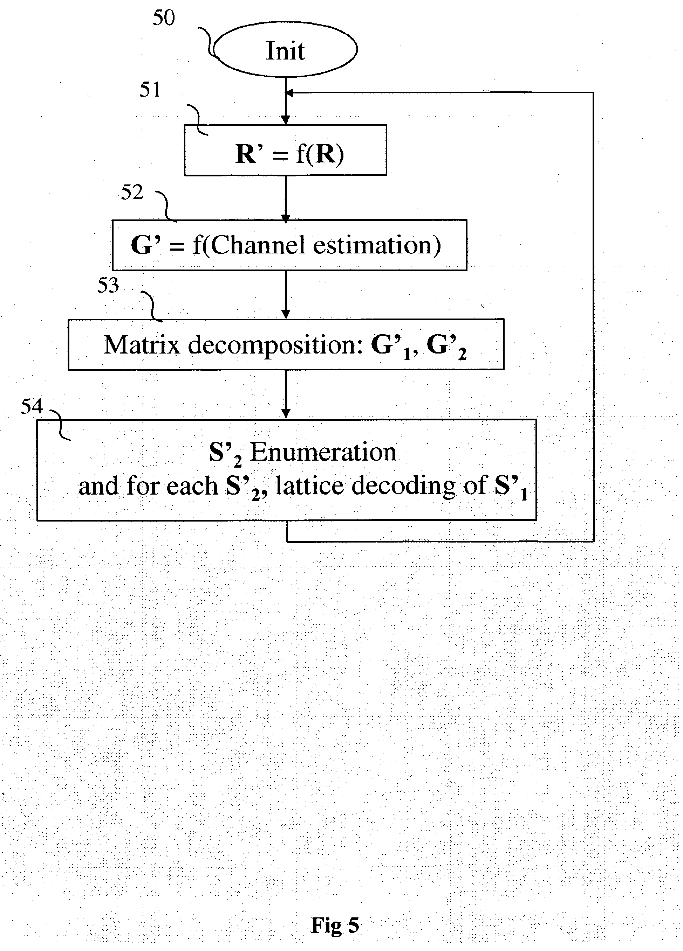

The decoder 35 is particularly well suited to perform ML decoding of the Space-Time Block encoded signal. It implements the algorithm presented in figure 5.

According to a specific embodiment of the invention, the system represented above is underdetermined, i.e. the number of components of the received signal $2N_{rx}N$ given by the size of R' (that correspond to the received space-time signal written in real notations); it is a real vector of size $(2N_{rx}N)*1$ smaller than the number of unknowns $2*Q$ given by the size of S' (S' is the transmitted multidimensional discrete signal written in real notations; it is a real vector of size $2Q*1$). $v'$ is the $2NN_{rx}*1$ Additive White Gaussian Noise (AWGN) vector in real notations with autocorrelation matrix $R_{v'v'} = \sigma^2/2 \; I_{2NNrx}$.

Relation (1) can be rewritten as:

$$R' = \begin{bmatrix} G'_1 & G'_2 \end{bmatrix} \begin{bmatrix} S'_1 \\ S'_2 \end{bmatrix} + v' = G'_1 S'_1 + G'_2 S'_2 + v' \qquad (2)$$

where:

- $G'_1$ is made of a collection of $2N_{rx}N$ columns of G' out of the $2Q$ columns;
- $S'_1$ is a vector made of the related $2N_{rx}N$ transmitted signal components out of the $2Q$ components of S';
- $G'_2$ is made of the remaining $2Q - 2N_{rx}N$ columns of G'; and
- $S'_2$ is a vector made of the related $2Q - 2N_{rx}N$ remaining transmitted signal components of S'.

According to this embodiment of the invention, all possible values of $S'_2$ are enumerated, and, for each candidate value of $S'_2$ a intermediate signal is formed and a ML decoding of the intermediate signal is performed to produce $S'_1$.

A decoded candidate for S' is made of the components of $S'_1$ and $S'_2$, and the ML solution among all candidates S' is the one within smallest Euclidean distance from the multidimensional received signal R'.

Given a candidate $S'_2$, finding $\mathbf{S'} = \begin{bmatrix} \mathbf{S'}_1 \\ \mathbf{S'}_2 \end{bmatrix}$ that minimizes the value of $\left\| \mathbf{R'} - \begin{bmatrix} \mathbf{G'}_1 & \mathbf{G'}_2 \end{bmatrix} \begin{bmatrix} \mathbf{S'}_1 \\ \mathbf{S'}_2 \end{bmatrix} \right\|$

is equivalent to, given a candidate $S'_2$, finding $S'_1$ that minimizes the value of $\left\| \underbrace{(\mathbf{R'} - \mathbf{G'}_2\,\mathbf{S'}_2)}_{\mathbf{R''}} - \mathbf{G'}_1\,\mathbf{S'}_1 \right\|$.

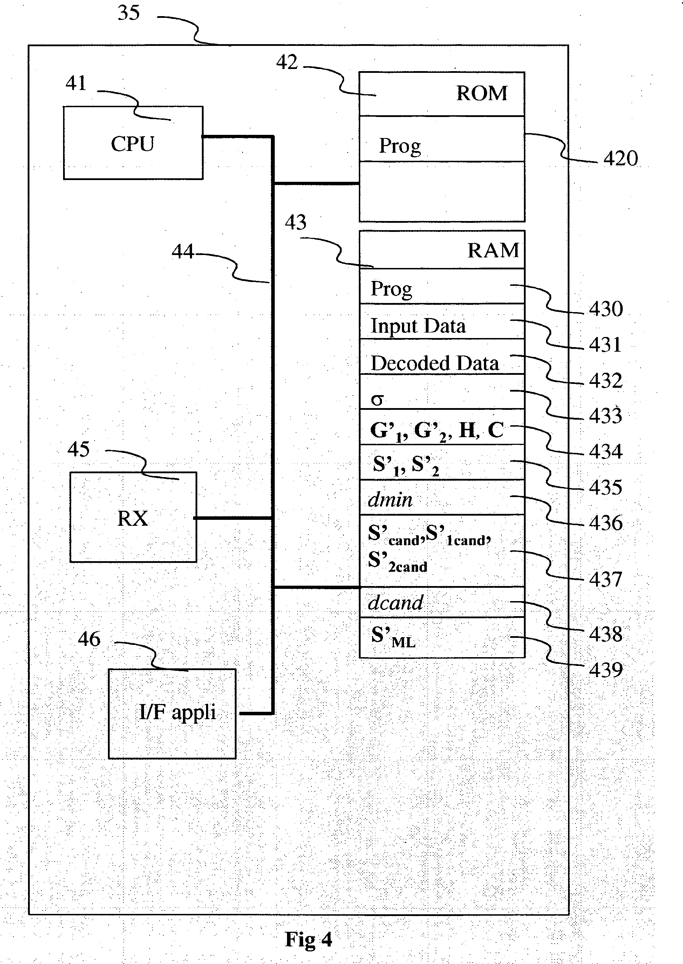

Figure 4 represents an exemplary architecture of the decoder 35 of the receiver 3.

Decoder 35 comprises following elements that are linked together by a data and address bus 44:

- a microprocessor 41 (or CPU), which is, for example, a DSP (or Digital Signal Processor);
- a ROM (or Read Only Memory) 42;
- a RAM (or Random Access Memory) 43;
- an interface 45 for reception of input signal coming from the demapper 33;
- an interface 46 for transmission of decoded data to an application.

Each of these elements of figure 4 are well known by those skilled in the art and won't be disclosed further.

In each of mentioned memory, the word « register» used in the specification can correspond to area of small capacity (some bits) or to very large area (e.g. a whole program or large amount of received or decoded data).

ROM 42 comprises a program 420.

Algorithm of the method according to the invention are stored in the ROM 42. When switched on, the CPU 41 uploads the program 420 in the RAM and executes the corresponding instructions.

RAM 43 comprises:

- in a register 430, the program executed by the CPU 41 and uploaded after switch on of the decoder 35;
- input data in a register 431;
- decoded data in a register 432;
- a value of σ (standard deviation of noise) in a register 433;
- matrices $G'_1$, $G'_2$ (equivalent channel matrix), H (channel matrix), C (code matrix) in a register 434;
- decoded candidates $S'_1$, $S'_2$ in a register 435;
- value of minimum distance *dmin* in register respectively 436;
- intermediates candidates $S'_{cand}$ made of $S'_{1cand}$ and $S'_{2cand}$ in a register 437;
- value of a candidate distance *dcand* in a register 438; and
- ML candidate $S'_{ML}$ in a register 439.

According to a variant of the invention, the decoder 35 is implemented in pure hardware configuration (e.g. in one or several FPGA, ASIC or VLSI with corresponding memory) or in a configuration using both VLSI and DSP.

Figure 5 represents a decoding method of a multidimensional received signal, implemented in the decoder 35, especially in an undetermined case as mentioned above. The multidimensional received signal corresponds to a discrete multidimensional signal, S', which is coded by transmitter 2 and is transmitted through a channel to a receiver. The multidimensional received signal comprises several elementary signals, corresponding each to a sample of time and/or frequency and of space.

The decoding begins with a initialization step 50, wherein different parameters of the method are set to their initial value(s).

Then, during a step 51, the decoder 35 waits for and receives a signal from demapper 33.

Then, the CPU 41 makes a channel estimation 52 based upon the received signal (associated to one transmitted block) or part of it. According to a variant of the invention, the estimation 52 is based upon several received signals (or part of them), each being associated to a transmitted block. According to another variant of the invention, the estimation 52 is not done at each reception of signal corresponding to one transmitted block; in this case, it may be done when necessary according to the channel changes (e.g. every 1 ms).

Then, during a step 53, the CPU 41 makes a matrix decomposition by forming sub-matrices $G'_1$ and $G'_2$ such that :

$$\mathbf{R'} = \begin{bmatrix} \mathbf{G'}_1 & \mathbf{G'}_2 \end{bmatrix} \begin{bmatrix} \mathbf{S'}_1 \\ \mathbf{S'}_2 \end{bmatrix} + \mathbf{v'} = \mathbf{G'}_1 \mathbf{S'}_1 + \mathbf{G'}_2 \mathbf{S'}_2 + \mathbf{v'} .$$

Then, the transmitted signal S' corresponds to the multidimensional received signal being considered as the sum of contributions of two transmitted sub-signals $S'_1$ and $S'_2$, the first sub-signal S'1 being associated to the first sub-matrix $G'_1$ and a second sub-signal $S'_2$ being associated to the second sub-matrix $G'_2$.

$G'_1$ is made of a subset of $2N_{rx}N$ columns of G' out of the $2Q$ columns, so that the resulting matrix $G'_1$ is of maximum rank (i.e. $G'_1$ is a $2N_{rx}N*2N_{rx}N$). Among all possible sub-matrices of G', $G'_1$ is any of possible matrices of largest rank (to reduce the complexity of the lattice search) (e.g. the first ones). As a variant, $G'_1$ comprises any subset of $2N_{rx}N$ columns of G' .$G'_2$ is made of remaining column of G'. When the STBC is not a simple spatial multiplexing, the subset of columns that are linearly are known. Then, the independent columns can be defined. Then, the selection of $G'_1$ comprises a selection of independent columns. When the STBC is a simple spatial multiplexing, then any $2N_{rx}N$ columns of G' (e.g. the first ones) are selected to form $G'_1$; in this case, any subset of columns of G' has statistically the same independency properties.

During this step, the distance *dmin* is first set to infinite value ($+\infty$).

Then, during a step 54, all possible values of $S'_2$ are enumerated and a lattice decoding of $S'_1$ is performed on an intermediate signal corresponding to enumerated values of $S'_2$. During this step, a ML candidate or candidate signal is selected. The result of the decoding of the received signal corresponds to a combination of a candidate signal and of the value of the second sub-signal for which the candidate distance (i.e. the distance between the intermediate signal (denoted R" in the following) and the contribution of the candidate signal (denoted $S'_{1cand}$ in the following)) is minimum. As a variant, to reduce the decoding complexity, only a part of possible values of the values $S'_2$ are enumerated. For example, in this case, a part of the components of $S'_2$ corresponding to reduced energy (the norm of the related column of G' is below a given threshold) are not enumerated.

Then, step 51 is reiterated.

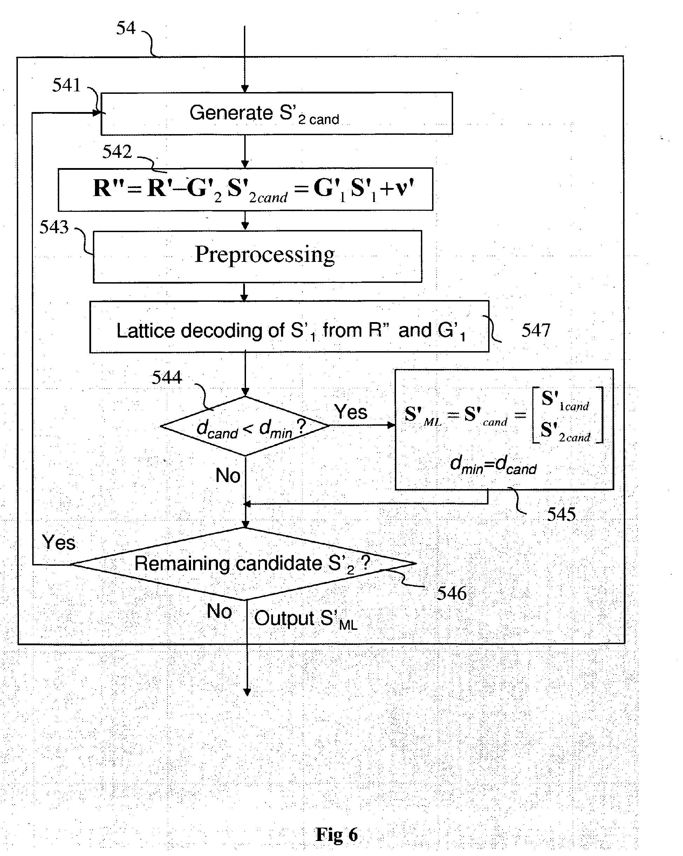

Figure 6 details step 54.

During a first step 541, a candidate $S'_2$ denoted $S'_{2cand}$ is selected. At first time, step 541 is executed in step 54, any possible candidate is chosen. During following iterations, a candidate is chosen among non already chosen candidates.

During step 542, a intermediate signal R" is generated. The signal R" is equal to $R'-G'_2 S'_{2cand}$. R" is also equals to $G'_1 S'_1 + v'$.

Then, during steps 543 and 547, the signal R" is decoded. More precisely, during a step 543, the CPU 41 performs a preprocessing in step 543 and lattice decoding of $S'_1$ using the relation $R" = G'_1 S'_{1+v}'$. Step 547 is performed by using a lattice decoding method applied to R". This lattice decoding is based on the enumeration of candidates as in document "A universal lattice code decoder for fading channel," written by E. Viterbo and J. Boutros (and published in IEEE Trans. Inform. Theory, vol. 45, pages 1639-1642, July 1999) or in document "Lattice basis reduction: Improved practical algorithms and solving subset sum problems," written by C.P. Schnorr and M. Euchner (and published in Math. ProGraming, vol. 66, pages. 181-191, 1994). According to a variant, any other lattice decoding that can be applied on a MIMO signal is used.

Outputs of step 547 comprises a candidate $S'_1$ denoted $S'_{1cand}$ that corresponds to the ML decoding of $S'_{2cand}$ with a distance denoted *dcand,* defined as : $dcand= \|R"-G'_1 S'_1 cand\|$.

Then, during test 544, the CPU 41 checks if *dcand* is strictly smaller than *dmin.*

If so, during a step 545, a ML candidate $S'_{ML}$ is assigned to the candidate $S'_{cand}$ corresponding to vector made of $S'_{1cand}$ and $S'_{2cand}$. During step 545, distance *dmin* is assigned to candidate distance *dcand* corresponding to the distance associated to $S'_{cand}$.

After step 545, or if the result of test 644 is negative, during a test 546, the CPU 41 checks if candidates $S'_2$ are remaining.

If so, step 541 is reiterated.

If not, step 54 is ended and the output $S'_{ML}$ corresponds to the ML decoding of received signal R'.

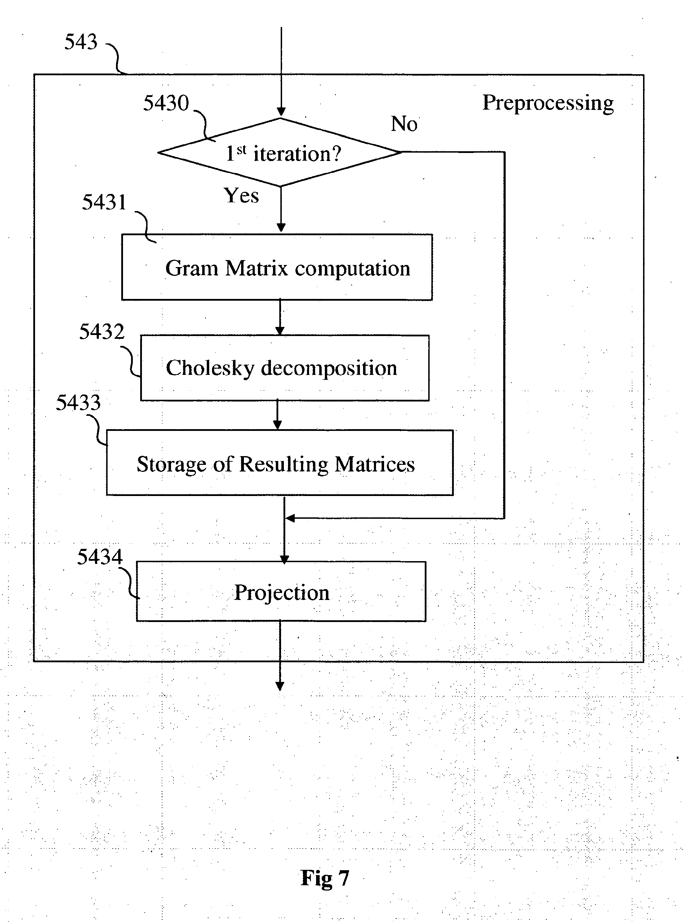

Figure 7 details the preprocessing step 543. The step 543 begins with a test 5430, which checks if step 543 is performed for the first time during step 54.

If so, during a step 5431, a Gram Matrix is computed. Gram matrix corresponds to a multiplication of a matrix $G'_1$ by its transpose $G'_1{}^t$.

Then, during a step 5432, the CPU 41 executes a triangular decomposition (e.g. a Cholesky decomposition of the associated Gram matrix). This operation provides a triangular matrix U corresponding to the Gram matrix. More precisely, thanks to the structure of $G'_1$, a triangular matrix U is defined as follows (where $X^t$ denotes the transpose of a matrix X):

$$G'^t_1 \, G'_1 = U^t U$$

Then, during a step 5433, resulting matrices $G'^t_1$ and $U^t$ are stored in the RAM.

After step 5433 or after the test 5430, when its result is negative, in a step 5434, the received signal is projected on the matrix computed on step 5432. This projection first multiplies the signal R'' by $G'^t_1$ and then by the inverse of $U^t$.

As the variant, the step 5432 is replaced by a QR decomposition of a new equivalent channel matrix ($G'_1$), $G'_1$ being equal to QU where Q is an orthogonal matrix and U an upper triangular matrix. In this case, step 5434 comprises a multiplication by $Q^t$.

Of course, the invention is not limited to the embodiments described above.

The invention is compatible with any type of wireless link (point to point links, wireless LANs, mobile networks, digital broadcasting, satellite communication, ...). The disclosed receiver in figure 3 comprises then elements adapted to a specific application (such as front end, demodulator, MAC layer interface, and all other usual communication layer elements). The invention is especially well adapted to the reception of Digital Video Broadcasting (or DVB (e.g. DVB-T (terrestrial), DVB-S (satellite), DVB-H (handheld)..). In this case, the discrete multidimensional coded signal comprises data representative of a digital video broadcast signal.

The invention is advantageously used in high spectral efficiency wireless transmission (MIMO system and/or nQAM modulation), and, in particular, high rate transmission. Indeed, the invention can be used for other transmission (eg. single antenna for multi-user detection, nQPSK modulation, ...).

The invention is not limited to MIMO decoding or multi-user detection and can be applied to combination of MIMO decoding and multi-user detection and more generally to any system wherein noise amplitude distribution is following a chi square law and more generally laws that are not centred on 0 (these laws are generally associated to a multidimensional distribution of noise in a multidimensional signal decoding).

The invention comprises the determination of a minimum distance according to a noise level associated to the multidimensional received signal. When applied to a MIMO decoding, the dimensions of the received signals corresponds to $K$ (in real notation for nQAM or nPSK modulation) or $Q$ (in complex notation for nQAM or nPSK modulation or polar notation for nPSK modulation). When applied to a multi-user detection, the dimensions of the received signal corresponds to the number of users ($Q$ in complex notation or polar notation (if the users using nPSK modulation)) or $K=2Q$ in real notation.

According to MIMO decoding related to the invention, the receiver decodes a signal that has been space time encoded and transmitted with at least two antennas. The space time encoding can be based on a space time block code. According to a variant, the space time encoding is a simple spatial multiplexing; then, the code matrix C is the identity matrix.

### Claims

1. Method of decoding of a multidimensional received signal (R') corresponding to a discrete multidimensional coded signal transmitted through a channel, so-called transmitted signal, the multidimensional received signal comprising several elementary signals, corresponding each to a sample of time and/or frequency and of space, **characterised in that** the number of reception antenna(s) are lower than the number of elementary signals and **in that** the method comprises the following steps:

    - a decomposition (53) of a channel matrix (G') into a first sub-matrix ($G'_1$) and a second sub-matrix ($G'_2$), the transmitted signal (S') corresponding to the multidimensional received signal being considered as the sum of contributions of two transmitted sub-signals ($S'_1$, $S'_2$), a first sub-signal ($S'_1$) being associated to the first sub-matrix and a second sub-signal ($S'_2$) being associated to the second sub-matrix;
    - a decoding (54) of the multidimensional received signal comprising:

        - enumeration (541) of at least a part of all possible values of the second sub-signal;
        - for each of the enumerated values of the second sub-signal construction (542) of an intermediate signal and decoding of the intermediate signal by a lattice decoding, the base of the lattice being defined from the first sub-matrix, the result of the lattice decoding being called candidate signal and the distance between the intermediate signal and the contribution of the candidate signal being called candidate distance;

    the result of the decoding of the received signal corresponding to a combination of the candidate signal and of the value of the second sub-signal for which the candidate distance is minimum.

**2.** Method according to claim 1, **characterised in that** a first sub-matrix ($G'_1$) is of maximum rank.

**3.** Method according to any of claims 1 and 2, **characterised in that** the enumeration is performed on all possible values of the second sub-signal.

**4.** Method according to any of claims 1 and 2, **characterised in that** the enumeration is performed on only a part of possible values of the second sub-signal.

**5.** Method according to claim 4, **characterised in that** the enumeration is performed only on possible values of the second sub-signal that are related to the colums of the channel matrix ($G'$), that have energy over a threshold.

**6.** Method according to any of claims 1 to 5, **characterised in that** transmitted signal is space-time or space-frequency encoded.

**7.** Method according to claim 6, **characterised in that** transmitted signal is space-time or space-frequency encoded that is not limited to a simple spatial multiplexing.

**8.** Method according to any of claims 1 to 7, **characterised in that** the method comprises a reception of multidimensional received signal on antennas, the number of antennas being smaller that the number of symbols per channel use.

**Patentansprüche**

**1.** Verfahren zum Decodieren eines mehrdimensionalen Empfangssignals ($R'$), das einem diskreten mehrdimensionalen codierten Signal, das über einen Kanal gesendet wird, einem sogenannten Sendesignal, entspricht, wobei das mehrdimensionale Empfangssignal mehrere elementare Signale umfasst, die jeweils einem Abtastwert der Zeit und/oder Frequenz und des Raums entsprechen, **dadurch gekennzeichnet, dass** die Anzahl der Empfangsantenne(n) niedriger als die Anzahl elementarer Signale ist, und dadurch, dass das Verfahren die folgenden Schritte umfasst:

- eine Zerlegung (53) einer Kanalmatrix ($G'$) in eine erste Untermatrix ($G'_1$) und in eine zweite Untermatrix ($G'_2$), wobei das Sendesignal ($S'$) dem mehrdimensionalen Empfangssignal entspricht, das als die Summe der Beiträge zweier Untersendesignale ($S'_1$, $S'_2$) angesehen wird, wobei der ersten Untermatrix ein erstes Untersignal ($S'_1$) zugeordnet wird und der zweiten Untermatrix ein zweites Untersignal ($S'_2$) zugeordnet wird;
- eine Decodierung (54) des mehrdimensionalen Empfangssignals, wobei die Decodierung umfasst:

- Aufzählung (541) mindestens eines Teils aller möglichen Werte des zweiten Untersignals;
- für jeden der aufgezählten Werte der zweiten Untersignals Konstruktion (542) eines Zwischensignals und Decodieren des Zwischensignals durch eine Gitterdecodierung, wobei die Basis des Gitters von der ersten Untermatrix definiert wird, wobei das Ergebnis der Gitterdecodierung Kandidatensignal genannt wird und wobei die Entfernung zwischen dem Zwischensignal und dem Beitrag des Kandidatensignals Kandidatenentfernung genannt wird;

wobei das Ergebnis der Decodierung des Empfangssignals einer Kombination des Kandidatensignals und des Werts des zweiten Untersignals, für die die Kandidatenentfernung minimal ist, entspricht.

**2.** Verfahren nach Anspruch 1, **dadurch gekennzeichnet, dass** eine erste Untermatrix ($G'_1$) den maximalen Rang besitzt.

**3.** Verfahren nach einem der Ansprüche 1 und 2, **dadurch gekennzeichnet, dass** die Aufzählung an allen möglichen Werten des zweiten Untersignals ausgeführt wird.

**4.** Verfahren nach einem der Ansprüche 1 und 2, **dadurch gekennzeichnet, dass** die Aufzählung nur an einem Teil der möglichen Werte des zweiten Untersignals ausgeführt wird.

**5.** Verfahren nach Anspruch 4, **dadurch gekennzeichnet, dass** die Aufzählung nur an möglichen Werten des zweiten Untersignals ausgeführt wird, die verwandet mit den Spalten der Kanalmatrix ($G'$) sind, die eine Energie über einem Schwellenwert besitzen.

**6.** Verfahren nach einem der Ansprüche 1 bis 5, **dadurch gekennzeichnet, dass** das Sendesignal Raumzeit- oder Raumfrequenz-codiert ist.

**7.** Verfahren nach Anspruch 6, **dadurch gekennzeichnet, dass** das Sendesignal Raumzeit- oder Raumfrequenz-codiert, das heißt nicht auf eine einfache räumliche Multiplexierung beschränkt ist.

**8.** Verfahren nach einem der Ansprüche 1 bis 7, **dadurch gekennzeichnet, dass** das Verfahren einen Empfang des mehrdimensionalen Empfangssignals an Antennen umfasst, wobei die Anzahl der Antennen kleiner als die Anzahl der Symbole pro Kanalverwendung ist.

## Revendications

**1.** Procédé de décodage d'un signal reçu multidimensionnel (R') correspondant à un signal codé multidimensionnel discret transmis via un canal, appelé signal transmis, le signal reçu multidimensionnel comprenant plusieurs signaux élémentaires, correspondant chacun à un échantillon de temps et/ou de fréquence et d'espace, **caractérisé en ce que** le nombre d'antenne(s) de réception est inférieur au nombre de signaux élémentaires et **en ce que** le procédé comprend les étapes suivantes :

- une décomposition (53) d'une matrice de canal (G') en une première sous-matrice ($G'_1$) et une deuxième sous-matrice ($G'_2$), le signal transmis (S') correspondant au signal reçu multidimensionnel étant considéré comme la somme de contributions de deux sous-signaux transmis ($S'_1$, $S'_2$), un premier sous-signal ($S'_1$) étant associé à la première sous-matrice et un deuxième sous-signal ($S'_2$) étant associé à la deuxième sous-matrice ;
- un décodage (54) du signal reçu multidimensionnel comprenant :

- une énumération (541) d'au moins une partie de l'ensemble des valeurs possibles du deuxième sous-signal ;
- pour chacune des valeurs énumérées de la construction (542) du deuxième sous-signal d'un signal intermédiaire et un décodage du signal intermédiaire par un décodage en treillis, la base du treillis étant définie à partir de la première sous-matrice, le résultat du décodage en treillis étant appelé signal candidat et la distance entre le signal intermédiaire et la contribution du signal candidat étant appelée distance candidate ;

le résultat du décodage du signal reçu correspondant à une combinaison du signal candidat et de la valeur du deuxième sous-signal pour lequel la distance candidate est minimale.

**2.** Procédé selon la revendication 1, **caractérisé en ce qu'**une première sous-matrice ($G'_1$) présente un rang maximal.

**3.** Procédé selon une quelconque des revendications 1 et 2, **caractérisé en ce que** l'énumération est réalisée sur toutes les valeurs possibles du deuxième sous-signal.

**4.** Procédé selon une quelconque des revendications 1 et 2, **caractérisé en ce que** l'énumération est réalisée uniquement sur une partie des valeurs possibles du deuxième sous-signal.

**5.** Procédé selon la revendication 4, **caractérisé en ce que** l'énumération est réalisée uniquement sur des valeurs possibles du deuxième sous-signal qui sont associées aux colonnes de la matrice de canal (G'), lesquelles présentent une énergie supérieure à un seuil.

**6.** Procédé selon une quelconque des revendications 1 à 5, **caractérisé en ce que** le signal transmis fait l'objet d'un codage spatio-temporel ou spatio-fréquentiel.

**7.** Procédé selon la revendication 6, **caractérisé en ce que** le signal transmis fait l'objet d'un codage spatio-temporel ou spatio-fréquentiel qui ne se limite pas à un simple multiplexage spatial.

**8.** Procédé selon une quelconque des revendications 1 à 7, **caractérisé en ce que** le procédé comprend une réception d'un signal reçu multidimensionnel sur des antennes, le nombre d'antennes étant inférieur au nombre de symboles par utilisation de canal.

1

11

12

10

**Fig 1**

2

20    21    22    23    24    25    261    271

Mod    Encoder    t/F
mapping    OFDM

26Ntx    27Ntx    281

OFDM

28Ntx

**Fig 2**

3

301   311   321   33   35

OFDM

t/F demapping

34   Decoder   36

**Fig 3**

**Fig 4**

50

Init

51

$$\mathbf{R'} = f(\mathbf{R})$$

52

$$\mathbf{G'} = f(\text{Channel estimation})$$

53

Matrix decomposition: $\mathbf{G'}_1, \mathbf{G'}_2$

54

$\mathbf{S'}_2$ Enumeration
and for each $\mathbf{S'}_2$, lattice decoding of $\mathbf{S'}_1$

**Fig 5**

**54**

**541** Generate S'$_{2\,cand}$

**542** $\mathbf{R''}=\mathbf{R'}-\mathbf{G'}_2\,\mathbf{S'}_{2cand}=\mathbf{G'}_1\,\mathbf{S'}_1+\mathbf{v'}$

**543** Preprocessing

Lattice decoding of S'$_1$ from R'' and G'$_1$   **547**

**544** $d_{cand}<d_{min}\,?$

Yes → $\mathbf{S'}_{ML}=\mathbf{S'}_{cand}=\begin{bmatrix}\mathbf{S'}_{1cand}\\\mathbf{S'}_{2cand}\end{bmatrix}$  $d_{min}=d_{cand}$   **545**

No

Yes ← Remaining candidate S'$_2$ ?   **546**

No | Output S'$_{ML}$

**Fig 6**

15

543

Preprocessing

5430

1st iteration?

No

Yes

5431

Gram Matrix computation

5432

Cholesky decomposition

5433

Storage of Resulting Matrices

5434

Projection

**Fig 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050009476 A

- EP 1635500 A1

**Non-patent literature cited in the description**

- **E. Viterbo ; J. Boutros.** A universal lattice code decoder for fading channel. *IEEE Trans. Inform. Theory,* July 1999, vol. 45, 1639-1642
- **C.P. Schnorr ; M. Euchner.** Lattice basis reduction: Improved practical algorithms and solving subset sum problems. *Math. ProGraming,* 1994, vol. 66, 181-191
- **Gerard. J. Foschini.** Layered Space-Time Architecture for Wireless Communication in a Fading Environment When Using Multi-Element Antennas. *Bell Laboratories Technical Journal,* 1996, 41-59
- **J.-C. BELFIORE ; G. REKAYA ; E. VITERBO.** The Golden Code: A 2 x 2 Full-Rate Space-Time Code with Non-Vanishing Determinants. *IEEE Transactions on Information Theory,* April 2005, vol. 51, 1432-1436

- The Golden Code: A 2 x 2 Full-Rate Space-Time Code with Non-Vanishing Determinants. *IEEE Transactions on Information Theory,* April 2005, vol. 51 (4), 1432-1436
- Space-frequency coded broadband OFDM systems. *Proc. Wireless Commun. Networking Conf,* 23 September 2000, 1-6
- A universal lattice code decoder for fading channel. *IEEE Trans. Inform. Theory,* July 1999, vol. 45, 1639-1642
- Lattice basis reduction: Improved practical algorithms and solving subset sum problems. *Math. ProGraming,* 1994, vol. 66, 181-191